# EUROPÄISCHE PATENTSCHRIFT

(11) **EP 3 544 849 B1**
(45) Veröffentlichungstag und Bekanntmachung des Hinweises auf die Patenterteilung: **04.11.2020**
(21) Anmeldenummer: 17804159.6
(22) Anmeldetag: 22.11.2017
(51) Int. Cl.: B60L 15/20, B60L 3/10, B60K 1/00, B60K 7/00, B60K 17/354, B60K 17/356

(54) **ALLRADSYSTEM FÜR EIN ELEKTRISCHES KRAFTFAHRZEUG UND VERFAHREN ZUM BETREIBEN EINES ALLRADSYSTEMS EINES SOLCHEN FAHRZEUGS**
ALL-WHEEL SYSTEM FOR AN ELECTRIC MOTOR VEHICLE, AND METHOD FOR OPERATING AN ALL-WHEEL SYSTEM OF SUCH A VEHICLE
SYSTÈME DE TRANSMISSION INTÉGRALE POUR UN VÉHICULE AUTOMOBILE ÉLECTRIQUE ET PROCÉDÉ PERMETTANT DE FAIRE FONCTIONNER UN SYSTÈME DE TRANSMISSION INTÉGRALE D'UN TEL VÉHICULE

(30) Priorität: 23.11.2016 DE 102016223186
(43) Veröffentlichungstag der Anmeldung: 02.10.2019
(73) Patentinhaber: Audi AG, 85045 Ingolstadt (DE)
(72) Erfinder: WEIN, Michael, 92358 Seubersdorf (DE); BÄR, Michael, 85053 Ingolstadt (DE); GRAF, Christian, 85053 Ingolstadt (DE); MEITINGER, Karl-Heinz, 80639 München (DE)
(86) Internationale Anmeldenummer: PCT/EP2017/080005
(87) Internationale Veröffentlichungsnummer: WO 2018/095950

(56) Entgegenhaltungen:
- DE-A1-102011 100 814
- DE-A1-102013 206 379
- DE-A1-102015 000 216
- US-A1- 2014 343 770

## Beschreibung

Die Erfindung betrifft ein Allradsystem für ein Kraftfahrzeug und ein Verfahren zum Betreiben eines Allradsystems eines Kraftfahrzeugs.

Heutige elektrische Allradsysteme sind üblicherweise momentengeregelt. Den Leistungselektroniken der jeweiligen elektrischen Achsantriebe wird jeweils ein Zielmoment vorgeben. Die Summe der den Leistungselektroniken vorgegebenen Momente bildet die Summe des vom Fahrer gewünschten Antriebsmoments bzw. der durch die Antriebs-Schlupfregelung freigegebenen Momente ab. Die Allradregelung verändert die Verteilung dieses Antriebsmoments abhängig von Größen wie z.B. Gierrate, Längsbeschleunigung und/oder Lenkwinkel mit dem Ziel, das Fahrverhalten zu verbessern. Ein weiteres Regelziel besteht üblicherweise in der gezielten Anpassung einer Differenzdrehzahl bzw. eines Differenzschlupfs zwischen beiden Antriebsachsen. Basis dafür sind üblicherweise jeweilige Informationen von Raddrehzahlsensoren. Abhängig von diesen Informationen wird die Momentenverteilung verändert und das Moment von der zu schnell drehenden Achse weg zur anderen Achse verlagert.

Es ergibt sich eine im Verhältnis zur Regelgeschwindigkeit von elektrischen Maschinen relativ langsame Regelschleife für die Drehzahlregelung derartiger rein elektrischer Allradsysteme. Im Vergleich zur Kopplung von zwei Antriebsachsen mittels Kupplungen, wie bei konventionellen Allradsystem mit nur einem Verbrennungsmotor, haben elektrische Allradsysteme im Eingriff einen Geschwindigkeitsnachteil.

Die DE 11 2013 003 790 T5 beschreibt einen elektrischen Antrieb mit einem Drehzahlsteuersystem. Der elektrische Antrieb umfasst eine elektrische Maschine, die über eine Kupplung mit einer Leistungsquelle gekoppelt ist. Die Leistungsquelle kann einen Dieselmotor, einen Benzinmotor oder einen Erdgasmotor umfassen. Die elektrische Maschine kann mittels der Leistungsquelle über die Kupplung angetrieben werden und dadurch elektrische Leistung abgeben. Alternativ kann die elektrische Maschine auch die Leistungsquelle antreiben, um diese zu starten. Das Drehzahlsteuersystem steuert die Drehzahl der elektrischen Maschine in Abhängigkeit von einem Vergleich zwischen einer gemessenen Drehzahl und einer vorgegebenen Soll-drehzahl der elektrischen Maschine sowie erzeugt ein Drehmomentbefehl für die elektrische Maschine auf Grundlage des Vergleichs.

Die DE 11 2014 002 414 T5 zeigt ein Hybridfahrzeug mit einem Verbrennungsmotor zum Antreiben einer Vorderachse und mit einem Elektromotor zum Antreiben einer Hinterachse des Hybridfahrzeugs. Eine Ist-Drehzahl des Elektromotors kann an eine vorgegebene Soll-Drehzahl angepasst werden.

Die DE 10 2011 111 775 A1 zeigt ein Hybridfahrzeug mit einem Verbrennungsmotor und zwei elektrischen Antriebsmotoren. Eine PID-Regelung steuert die elektrischen Antriebsmotoren Elektromaschinen basierend auf ihrem Drehmoment und ihren Drehzahlwerten, gleicht Drehzahlen an und verringert Vibrationen.

Es ist die Aufgabe der vorliegenden Erfindung, eine besonders reaktionsschnelles Allradsystem für ein Kraftfahrzeug bereitzustellen, dessen Achsen mittels jeweiliger elektrischer Maschinen angetrieben werden.

Diese Aufgabe wird ein Allradsystem für ein Kraftfahrzeug sowie durch ein Verfahren zum Betreiben eines Allradsystems eines Kraftfahrzeuges mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Das erfindungsgemäße Allradsystem für ein Kraftfahrzeug umfasst eine erste elektrische Maschine zum Antreiben einer ersten Antriebsachse des Kraftfahrzeugs. Zudem umfasst das Allradsystem eine erste Leistungselektronik zum Steuern einer Drehzahl der ersten elektrischen Maschine. Ferner weist das erfindungsgemäße Allradsystem eine zweite elektrische Maschine zum Antreiben einer zweiten Antriebsachse des Kraftfahrzeugs sowie eine zweite Leistungselektronik zum Steuern der Drehzahl der zweiten elektrischen Maschine in Abhängigkeit von einer Drehzahl der ersten elektrischen Maschine und einer vorgegebenen Differenzdrehzahl zwischen der ersten elektrischen Maschine und der zweiten elektrischen Maschine auf.

Das erfindungsgemäße Allradsystem zeichnet sich also dadurch aus, dass eine vorgegebene Differenzdrehzahl zwischen den beiden elektrischen Maschinen zur Regelung des Allradsystems genutzt wird. Den beiden Leistungselektroniken wird die besagte Differenzdrehzahl vorgegeben. Die erste Leistungselektronik wird dabei als primäre Leistungselektronik definiert. Die zweite Leistungselektronik ist dazu ausgelegt, die Drehzahl der ihr zugehörigen zweiten elektrischen Maschine in Abhängigkeit von der Drehzahl der ersten elektrischen Maschine und der vorgegebenen Differenzdrehzahl einzustellen.

Durch die Vorgabe der Drehzahldifferenz bezüglich der beiden elektrischen Maschinen wird indirekt auch eine Differenz im Hinblick auf die beiden Antriebsachsen berücksichtigt, zumindest solange die beiden elektrischen Maschinen mit den jeweiligen Antriebsachsen gekoppelt sind. Da beide Antriebsachsen angetrieben werden können, kennt man die Absolutgeschwindigkeit der beiden Antriebsachsen im Sinne einer absoluten translatorischen Geschwindigkeit entsprechend der Fortbewegungsgeschwindigkeit des betreffenden Kraftfahrzeugs, nicht, zumindest so lange die beiden Antriebsachsen von den beiden elektrischen Maschinen angetrieben werden. Daher ist es erfindungsgemäß vorgegeben, auf die Differenzdrehzahl zwischen den beiden Antriebsachsen und somit auch zwischen den beiden elektrischen Maschinen abzustellen, also einen Differenzschlupf zu messen. Im Hinblick auf die Regelung des Allradsystems ist also das Verhältnis der jeweiligen Drehzahlen der beiden Antriebsmaschinen und somit der beiden Antriebsachsen relevant.

Mittels des erfindungsgemäßen Allradsystems wird also virtuell ein konventionelles Allradsystem mit einer Kupplung zwischen einer ersten und zweiten Antriebsachse des Kraftfahrzeuges virtuell nachgebildet. Das erfindungsgemäße Allradsystem verhält sich im Wesentlichen wie ein konventionelles Allradsystem eines Kraftfahrzeuges mit einem Verbrennungsmotor und zwei angetriebenen Achsen, zwischen welchen eine Kupplung angeordnet ist.

Mittels des erfindungsgemäßen Allradsystems kann eine besonders schnelle Einregelung von Differenzdrehzahlen zwischen den beiden angetrieben Achsen des Kraftfahrzeugs erzielt werden. In Folge dessen ergibt sich eine verbesserte Traktion und eine Reduzierung des Radschlupfs beim Kraftfahrzeugs, bei welchem das erfindungsgemäße Allradsystem eingesetzt wird. Zudem wird mittels des erfindungsgemäßen Allradsystems eine Kopplung der Achsdrehzahlen der beiden Antriebsachsen analog zu einem mechanischen Kupplungssystem, also wie bei einem herkömmlichen Allradsystem mit einem Verbrennungsmotor, ermöglicht.

Bevorzugt werden jeweilige Drehzahlsensoren der elektrischen Maschinen genutzt, da diese wesentlich schneller reagieren als Raddrehzahlsensoren. Denn bei elektrischen Maschinen wird üblicherweise die Drehzahl im Kilohertzbereich abgetastet, sodass mit einer besonders hohen Abtastrate die jeweiligen Drehzahldifferenzen zwischen den beiden elektrischen Maschinen, und dadurch auch zwischen den beiden Antriebsachsen, erfasst werden können. In Folge dessen können Drehzahlunterschiede zwischen den beiden Antriebsachsen mittels des erfindungsgemäßen Allradsystems besonders schnell eingeregelt werden. Mittels des erfindungsgemäßen Allradsystems wird zudem ein Übersteuern oder Überschwingen eines Regel- oder Steuerkreises des Allradsystems durch eine ungünstige Reglung der Drehzahlen der beiden elektrischen Maschinen in erheblichen Maße reduziert oder vollkommen verhindert.

Eine vorteilhafte Ausführungsform der Erfindung sieht vor, das die zweite Leistungselektronik die Drehzahl der zweiten elektrischen Maschine derart anzusteuert, dass die Drehzahl der zweiten elektrischen Maschine kleiner als die Summe aus der Drehzahl der ersten elektrischen Maschine und der vorgegebenen Differenzdrehzahl ist. Mit anderen Worten kann also festgelegt sein, dass nur Abweichungen in eine Richtung ausgeregelt werden sollen, nämlich dass die Drehzahl der zweiten elektrischen Maschine immer kleiner als die Drehzahl der ersten elektrischen Maschine plus der vorgegebenen Differenzdrehzahl ist. In Folge dessen würde auch nur, falls erforderlich, ein Moment an der zweiten Antriebsachse des Kraftfahrzeugs reduziert werden.

Alternativ ist es auch möglich, dass die zweite Leistungselektronik dazu ausgelegt ist, die Drehzahl der zweiten elektrischen Maschine derart zu steuern, dass die Drehzahl der zweiten elektrischen Maschine einer Summe aus der Drehzahl der ersten elektrischen Maschine und der vorgegebenen Differenzdrehzahl entspricht. Somit können auch Abweichungen der Drehzahl in beide Richtungen, also zwischen beiden Antriebsachsen des Kraftfahrzeuges reguliert werden. In Folge dessen ergibt sich nicht nur ausschließlich eine Momentenreduzierung sondern auch eine Momentenumverteilung zwischen den beiden Antriebsachsen des Kraftfahrzeuges.

In weiterer vorteilhafter Ausgestaltung der Erfindung ist es vorgesehen, dass die beiden Leistungselektroniken dazu ausgelegt sind, die elektrischen Maschinen derart anzusteuern, dass eine Reduzierung eines Antriebsmoments an einer der elektrischen Maschinen zu einer entsprechenden Erhöhung des Antriebsmoments an der anderen elektrischen Maschine führt. Eine Reduzierung des Antriebsmoments an der zweiten Antriebsmaschine führt also zu einer entsprechenden Erhöhung des Antriebsmoments, welches mittels der ersten elektrischen Maschine bereitgestellt wird und umgekehrt. Das Summenantriebsmoment, welches von den beiden elektrischen Maschinen bereitgestellt wird, bleibt dadurch also konstant. Eine Umverteilung der jeweiligen Antriebsleistungen zwischen der ersten Antriebsachse und der zweiten Antriebsachse führt also nicht zu Momenten- und nicht zu Leistungseinbußen. Dadurch kann ein mit dem Allradsystem ausgestattetes Kraftfahrzeug besonders dynamisch bewegt werden, wobei die maximal sinnvoll bereitstellbare Leistung der beiden elektrischen Maschinen zum Vortrieb des Kraftfahrzeugs verwendet werden kann.

Eine weitere vorteilhafte Ausführungsform der Erfindung sieht vor, das die beiden Leistungselektroniken dazu ausgelegt sind, die beiden elektrischen Maschinen zusätzlich entsprechend einer vorgegebenen Momentenverteilung zwischen den Antriebsachsen anzusteuern. Vorzugsweise ist es also vorgesehen, neben der Vorgabe der Differenzdrehzahl zusätzlich eine Momentenverteilung bei der Ansteuerung und/oder Reglung des Allradsystems zu berücksichtigen. Durch die kombinierte Momenten- und DrehzahlSteuerung bzw. -Regelung kann die Leistungs- und Kraftverteilung zwischen den beiden angetriebenen Achsen optimal und besonders dynamisch eingestellt werden.

Gemäß einer weiteren vorteilhaften Ausführungsform der Erfindung ist es vorgesehen, dass die zweite Leistungselektronik dazu ausgelegt ist, die Drehzahl der zweiten elektrischen Maschine unter Berücksichtigung von wenigstens einer mittels einer Antischlupfregelung des Kraftfahrzeuges vorgegeben Zieldrehzahl für zumindest eine der beiden Antriebsachsen zu steuern. Gleiches kann auch für die erste Leistungselektronik analog gelten, sodass diese ebenfalls dazu ausgelegt sein kann, die Drehzahl der ersten elektrischen Maschine unter Berücksichtigung von einer Antischlupfregelung des Kraftfahrzeuges zu steuern. Die Anpassung der jeweiligen Drehzahlen der beiden elektrischen Maschinen kann also auch dazu genutzt werden, eine besonders gute Antischlupfregelung des Kraftfahrzeuges zu realisieren. An der zweiten Leistungselektronik wird dafür eine errechnete Zieldrehzahl noch mit einer Minimumbildung mit der antischlupfregelungsseitig vorgebeben Zieldrehzahl verrechnet. Dadurch sind die beiden Funktionen über eine entsprechende Drehzahlschnittstelle kompatibel.

Gemäß einer weiteren vorteilhaften Ausführungsform der Erfindung ist es vorgesehen, dass die beiden elektrischen Maschinen jeweils die gleiche Maximalleistung wie eine Traktionsbatterie des Kraftfahrzeuges aufweisen. Dadurch ist es möglich, 100 % der mittels der Traktionsbatterie lieferbaren Leistung auf die jeweiligen elektrischen Maschinen alleine zu verteilen. Im Extremfall ist es also möglich, nur eine der beiden Achsen mittels der jeweils zugeordneten elektrischen Maschine anzutreiben, wenn dies die Rahmenbedingungen erfordern sollten. Die Summe der von beiden elektrischen Maschinen abgebbaren Leistung ist also vorzugsweise doppelt so groß wie die mittels der Traktionsbatterie des Kraftfahrzeugs bereitstellbare Leistung. Weist die Traktionsbatterie beispielsweise eine Antriebsleistung von maximal 100 kW auf, so weisen die beiden elektrischen Maschinen jeweils ebenfalls 100 kW Maximalleistung auf. Dadurch ist es möglich, das Allradsystem quasi zu 100 % virtuell zu sperren.

Eine weitere vorteilhafte Ausführungsform der Erfindung sieht vor, dass die beiden Leistungselektroniken über einen gemeinsamen Zwischenkreis verfügen. Dadurch können die beiden Leistungselektroniken besonders schnell miteinander kommunizieren, in Folge dessen das Allradsystem besonders reaktionsschnell reagieren kann, um Momente und Drehzahlen zwischen den beiden elektrischen Maschinen zu verteilen. Grundsätzlich ist es von Vorteil, wenn die beiden Leistungselektroniken über eine sehr schnelle Datenverbindung verfügen, indem diese beispielsweise als Einheit mit einer direkten Signalkommunikation ausgestaltet sind.

Das erfindungsgemäße Kraftfahrzeug umfasst das erfindungsgemäße Allradsystem oder eine vorteilhafte Ausführung des erfindungsgemäßen Allradsystems.

Bei dem erfindungsgemäßen Verfahren zum Betreiben des erfindungsgemäßen Allradsystems oder einer vorteilhaften Ausführungsform des erfindungsgemäßen Allradsystems steuert die Leistungselektronik die Drehzahl der zweiten elektrischen Maschine in Abhängigkeit von einer Drehzahl der ersten elektrischen Maschine und einer vorgegebenen Differenzdrehzahl zwischen der ersten elektrischen Maschine und der zweiten elektrischen Maschine an. Vorteilhafte Ausgestaltungen des erfindungsgemäßen Allradsystems sind als vorteilhafte Ausgestaltungen des erfindungsgemäßen Verfahrens anzusehen, wobei das Allradsystem insbesondere Mittel zur Durchführung der Verfahrensschritte aufweist.

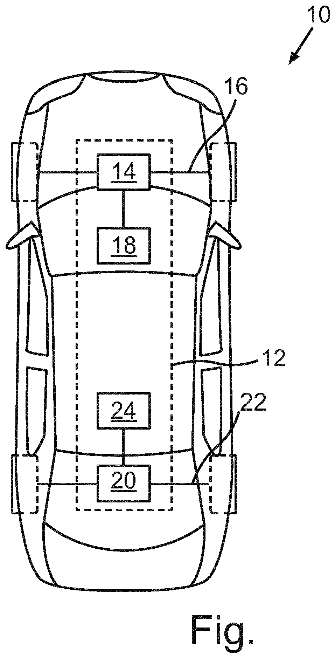

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie nachfolgend in der Figurenbeschreibung genannten und/oder in der einzigen Figur gezeigten Merkmale und Merkmalskombinationen sind nicht nur in der jeweils angegeben Kombination, sondern auch in anderen Kombinationen oder in Alleinstellung verwendbar, ohne den Rahmen der Erfindung zu verlassen.

Die Zeichnungen zeigt in der einzigen Figur eine schematische Darstellung eines Kraftfahrzeugs 10 mit einem Allradsystem 12. Bei dem hier gezeigten Kraftfahrzeug 10 handelt es sich um ein rein elektrisch angetriebenes Kraftfahrzeug. Das Allradsystem 12 umfasst eine erste elektrische Maschine 14 zum Antreiben einer ersten Antriebsachse 16 des Kraftfahrzeugs 10. Des Weiteren weist das Allradsystem 12 eine erste Leistungselektronik 18 zum Steuern der elektrischen Maschine 14 auf. Zudem umfasst das Allradsystem 12 eine zweite elektrische Maschine 20 zum Antreiben einer zweiten Antriebsachse 22 des Kraftfahrzeugs 10. Ferner weist das Allradsystem 12 noch eine zweite Leistungselektronik 24 zum Steuern der zweiten elektrischen Maschine 20 auf.

Die beiden elektrischen Maschinen 14, 20 werden mittels einer hier nicht dargestellten Traktionsbatterie mit elektrischer Energie gespeist. Vorzugsweise ist die jeweilige Maximalleistung der elektrischen Maschinen 14, 20 genauso groß wie die maximal abgebbare elektrische Leistung der hier nicht dargestellten Traktionsbatterie. Kann die hier nicht dargestellte Traktionsbatterie beispielsweise maximal 100 kW Leistung abgeben, so sind die beiden elektrischen Maschinen 14, 20 dazu ausgelegt, ihrerseits jeweils maximal 100 kW Leistung von der Traktionsbatterie aufzunehmen.

Die beiden Antriebsachsen 16, 22 sind, da diese über die jeweiligen elektrischen Maschinen 14, 20 separat angetrieben werden können, nicht über eine Kupplung miteinander gekoppelt, so wie es bei konventionellen Allradsystemen bei Kraftfahrzeugen mit einem Verbrennungsmotor erforderlich ist. Die beiden Leistungselektroniken 18, 24 können die beiden elektrischen Maschinen 14,20 jeweils separat ansteuern, um je nach Fahrerwunsch eine entsprechende Leistung und ein entsprechendes Drehmoment an den Antriebsachsen 16, 22 bereitzustellen.

Um eine besonders dynamische und reaktionsfreudige Reglung des Allradsystems 12 ohne ein steuerungs- bzw. regelungstechnisches Überschwingen des Allradsystems 12 zu ermöglichen, ist es vorgesehen, dass die zweite Leistungselektronik 24 zum Steuern der Drehzahl der zweiten elektrischen Maschine 20 in Abhängigkeit von einer Drehzahl der ersten elektrischen Maschine 14 und einer vorgegebenen Differenzdrehzahl zwischen der ersten elektrischen Maschine 14 und der zweiten elektrischen Maschine 20 ausgelegt ist. Es ist also vorgesehen, die beiden elektrischen Maschinen 14, 20 in Abhängigkeit davon anzusteuern, wie groß ein Drehzahlschlupf zwischen den beiden elektrischen Maschinen 14,20 augenblicklich ist.

Dies bringt den Vorteil mit sich, das jeweilige Drehzahlsensoren innerhalb der elektrischen Maschinen 14, 20 genutzt werden, welche eine besonders hohe Abtastrate im Kiloherzbereich aufweisen. Im Gegensatz zu der Messung und Berücksichtigung der tatsächlichen Raddrehzahlen, bei welchen die Abtastrate üblicherweise um ein vielfaches geringer ist, kann dadurch besonders schnell auf Drehzahlunterschiede zwischen den angetrieben Achsen 16, 22 reagiert werden. Darüber hinaus bringt die Drehzahlreglung bzw. Drehzahlsteuerung der beiden angetriebenen Achsen 16, 22 den Vorteil mit sich, dass eine derartigen Drehzahlregelung bzw. Drehzahlsteuerung wesentlich agiler ist als eine rein momentenbasierte Steuerung bzw. Regelung der beiden elektrischen Maschinen 14, 20.

Darüber hinaus kann es auch vorgesehen sein, dass zusätzlich noch eine Momentenregelung der beiden elektrischen Maschinen 14, 20 vorgesehen ist. Ein bei der ersten elektrischen Maschine 14 reduziertes Antriebsmoment wird vorzugsweise automatisch entsprechend von der zweiten elektrischen Maschine 20 zusätzlich aufgebracht und umgekehrt. Das von den beiden elektrischen Maschinen 14,20 in Summe bereitgestellte Antriebsmoment bleibt also - soweit traktionstechnisch umsetzbar und somit sinnvoll - konstant.

Die Steuerung bzw. Regelung der beiden elektrischen Maschinen 14, 20 kann zusätzlich noch mit einer hier nicht mehr dargestellten Antischlupfregelung des Kraftfahrzeugs 10 gekoppelt sein. Die Ansteuerung der beiden elektrischen Maschinen 14, 20 erfolgt also zusätzlich dann noch in Abhängigkeit von Vorgaben einer Antischlupfregelung. Die Antischlupfregelung kann beispielsweise für die jeweiligen Antriebsachsen 16, 22 eine Zieldrehzahl vorgeben, welche von der Absolutgeschwindigkeit des Kraftfahrzeugs 10 abhängt. Die Leistungselektroniken 18, 24 steuern die beiden elektrischen Maschinen 14, 20 dann derart an, dass die vorgegebene Zieldrehzahl für die beiden Achsen 16, 22 nicht überschritten wird, da sonst ein jeweiliger Radschlupf an den Antriebsachsen 16, 22 auftreten würde. Die beiden Leistungselektroniken 18, 24 können also zum einen eine besonders schnelle und reaktionsfreudigen Drehzahlanpassung an den beiden elektrischen Maschinen 14, 20 vornehmen und zudem können die Leistungselektroniken 18, 24 zusätzlich auch noch eine Umverteilung der mittels der elektrischen Maschinen 14, 20 bereitgestellten Antriebsmomente realisieren.

Da die beiden elektrischen Maschinen 14, 20 jeweils über die gleiche Maximalleistung wie die Traktionsbatterie verfügen, ist eine einhundertprozentige virtuelle Sperrwirkung zwischen den beiden angetrieben Achsen 16, 22 möglich. Die gesamte von der Traktionsbatterie bereitstellbare Leistung kann also bei Bedarf jeweils entweder von der ersten elektrischen Maschine 14 oder von der zweiten elektrischen Maschine 20 alleine bereitgestellt werden. Sollte beispielsweise der Fall auftreten, das die erste Antriebsachse 16 mit ihren Rädern auf Glatteis steht und die zweite angetriebene Achse 22 auf griffigem Asphalt steht, so wäre es möglich, die volle Antriebsleistung ausschließlich mittels der zweiten elektrischen Maschine 20 bereitzustellen. Insgesamt wird durch das beschriebene Allradsystem 12 eine Lösung bereitgestellt, mittels welcher Drehzahlunterschiede, also ein Drehzahlschlupf, zwischen zwei angetriebenen Achsen besonders schnell ausgeglichen werden kann, um so einen besonders schnellen und dynamischen und auch sicheren Vortrieb eines Kraftfahrzeugs zu ermöglichen.

## Patentansprüche

1. Allradsystem (12) für ein Kraftfahrzeug (10), umfassend
- eine erste elektrische Maschine (14) zum Antreiben einer ersten Antriebsachse (16) des Kraftfahrzeugs (10);
- eine erste Leistungselektronik (18) zum Steuern einer Drehzahl der ersten elektrischen Maschine (14);
- eine zweite elektrische Maschine (20) zum Antreiben einer zweiten Antriebsachse (22) des Kraftfahrzeugs (10);
- eine zweite Leistungselektronik (24) zum Steuern der Drehzahl der zweiten elektrischen Maschine (20) in Abhängigkeit von einer Drehzahl der ersten elektrischen Maschine (14) und einer vorgegebenen Differenzdrehzahl zwischen der ersten elektrischen Maschine (14) und der zweiten elektrischen Maschine (20).

2. Allradsystem (12) nach Anspruch 1,
**dadurch gekennzeichnet, dass**
die zweite Leistungselektronik (24) dazu ausgelegt ist, die Drehzahl der zweiten elektrischen Maschine (20) derart zu steuern, dass die Drehzahl der zweiten elektrischen Maschine (20) kleiner als die Summe aus der Drehzahl der ersten elektrischen Maschine (14) und der vorgegebenen Differenzdrehzahl ist.

3. Allradsystem (12) nach Anspruch 1,
**dadurch gekennzeichnet, dass**
die zweite Leistungselektronik (24) dazu ausgelegt ist, die Drehzahl der zweiten elektrischen Maschine (20) derart zu steuern, dass die Drehzahl der zweiten elektrischen Maschine (20) einer Summe aus der Drehzahl der ersten elektrischen Maschine (14) und der vorgegebenen Differenzdrehzahl entspricht.

4. Allradsystem (12) nach einem der vorhergehenden Ansprüche,
**dadurch gekennzeichnet, dass**
die beiden Leistungselektroniken (18, 24) dazu ausgelegt sind, die elektrischen Maschinen(14, 20) derart anzusteuern, dass eine Reduzierung eines Antriebsmoments an einer der beiden elektrischen Maschinen (14, 20) zu einer entsprechenden Erhöhung des Antriebsmoments an der anderen elektrischen Maschine (14, 20) führt.

5. Allradsystem (12) nach einem der vorhergehenden Ansprüche,
**dadurch gekennzeichnet, dass**
die beiden Leistungselektroniken (18, 24) dazu ausgelegt sind, die beiden elektrischen Maschinen (14, 20) zusätzlich entsprechend einer vorgegebenen Momentenverteilung zwischen den Antriebsachsen (16, 22) anzusteuern.

6. Allradsystem (12) nach einem der vorhergehenden Ansprüche,
**dadurch gekennzeichnet, dass**
die zweite Leistungselektronik (24) dazu ausgelegt ist, die Drehzahl der zweiten elektrischen Maschine (20) unter Berücksichtigung von wenigstens einer mittels einer Antischlupfregelung des Kraftfahrzeugs (10) vorgegebenen Zieldrehzahl für zumindest eine der beiden Antriebsachsen (16,22) zu steuern.

7. Allradsystem (12) nach einem der vorhergehenden Ansprüche,
**dadurch gekennzeichnet, dass**
die beiden elektrischen Maschinen (14, 20) jeweils zumindest die gleiche Maximalleistung wie eine Traktionsbatterie des Kraftfahrzeugs (10) aufweisen.

8. Allradsystem (12) nach einem der vorhergehenden Ansprüche,
**dadurch gekennzeichnet, dass**
die beiden Leistungselektroniken (18, 24) über einen gemeinsamen Zwischenkreis verfügen.

9. Kraftfahrzeug (10) mit einem Allradsystem (12) nach einem der vorhergehenden Ansprüche.

10. Verfahren zum Betreiben eines Allradsystems (12) nach einem der Ansprüche 1 bis 8, bei welchem die zweite Leistungselektronik (24) die Drehzahl der zweiten elektrischen Maschine (20) in Abhängigkeit von einer Drehzahl der ersten elektrischen Maschine (14) und einer vorgegebenen Differenzdrehzahl zwischen der ersten elektrischen Maschine (14) und der zweiten elektrischen Maschine (20) steuert.

## Claims

1. All-wheel system (12) for a motor vehicle (10), comprising
- a first electric machine (14) for driving a first drive axle (16) of the motor vehicle (10);
- a first electronic power unit (18) for controlling a rotational speed of the first electric machine (14);
- a second electric machine (20) for driving a second drive axle (22) of the motor vehicle (10);
- a second electronic power unit (24) for controlling the rotational speed of the second electric machine (20) as a function of a rotational speed of the first electric machine (14) and a prespecified differential rotational speed between the first electric machine (14) and the second electric machine (20).

2. All-wheel system (12) according to claim 1,
**characterised in that**
the second electronic power unit (24) is configured to control the rotational speed of the second electric machine (20) such that the rotational speed of the second electric machine (20) is smaller than the sum of the rotational speed of the first electric machine (14) and the prespecified differential rotational speed.

3. All-wheel system (12) according to claim 1,
**characterised in that**
the second electronic power unit (24) is configured to control the rotational speed of the second electric machine (20) such that the rotational speed of the second electric machine (20) corresponds to a sum of the rotational speed of the first electric machine (14) and the prespecified differential rotational speed.

4. All-wheel system (12) according to any of the preceding claims,
**characterised in that**
the two electronic power units (18, 24) are configured to control the electric machines (14, 20) in such a way that a reduction of a drive torque on one of the two electric machines (14, 20) leads to a corresponding increase of the drive torque on the other electric machine (14, 20).

5. All-wheel system (12) according to any of the preceding claims,
**characterised in that**
the two electronic power units (18, 24) are configured to additionally control the two electric machines (14, 20) according to a prespecified torque distribution between the drive axles (16, 22).

6. All-wheel system (12) according to any of the preceding claims,
**characterised in that**
the second electronic power unit (24) is configured to control the rotational speed of the second electric machine (20) taking into account at least one target rotational speed for at least one of the two drive axles (16, 22) prespecified by means of a traction control of the motor vehicle (10).

7. All-wheel system (12) according to any of the preceding claims,
**characterised in that**
the two electric machines (14, 20) each have at least the same maximum power as a traction battery of the motor vehicle (10).

8. All-wheel system (12) according to any of the preceding claims,
**characterised in that**
wherein the two electronic power units (18, 24) have a common intermediate circuit.

9. Motor vehicle (10) with an all-wheel system (12) according to any of the preceding claims.

10. Method for operating an all-wheel system (12) according to any of claims 1 to 8, wherein the second electronic power unit (24) controls the rotational speed of the second electric machine (20) as a function of a rotational speed of the first electric machine (14) and a prespecified differential rotational speed between the first electric machine (14) and the second electric machine (20).

## Revendications

1. Système de transmission intégrale (12) pour un véhicule à moteur (10), comprenant
- une première machine électrique (14) pour entraîner un premier essieu moteur (16) du véhicule à moteur (10) ;
- une première électronique de puissance (18) pour commander un régime de la première machine électrique (14) ;
- une seconde machine électrique (20) pour entraîner un second essieu moteur (22) du véhicule à moteur (10) ;
- une seconde électronique de puissance (24) pour commander le régime de la seconde machine électrique (20) en fonction d'un régime de la première machine électrique (14) et d'un régime différentiel prédéterminé entre la première machine électrique (14) et la seconde machine électrique (20).

2. Système de transmission intégrale (12) selon la revendication 1,
**caractérisé en ce que**
la seconde électronique de puissance (24) est conçue pour commander le régime de la seconde machine électrique (20) de sorte que le régime de la seconde machine électrique (20) soit inférieur à la somme du régime de la première machine électrique (14) et du régime différentiel prédéterminé.

3. Système de transmission intégrale (12) selon la revendication 1,
**caractérisé en ce que**
la seconde électronique de puissance (24) est conçue pour commander le régime de la seconde machine électrique (20) de sorte que le régime de la seconde machine électrique (20) soit égal à une somme du régime de la première machine électrique (14) et du régime différentiel prédéterminé.

4. Système de transmission intégrale (12) selon l'une quelconque des revendications précédentes,
**caractérisé en ce que**
les deux circuits électroniques de puissance (18, 24) sont conçus pour commander les machines électriques (14, 20) de sorte que la réduction du couple d'entraînement sur l'une des deux machines électriques (14, 20) provoque une augmentation correspondante du couple d'entraînement sur l'autre machine électrique (14, 20).

5. Système de transmission intégrale (12) selon l'une quelconque des revendications précédentes,
**caractérisé en ce que**
les deux circuits électroniques de puissance (18, 24) sont conçus pour commander en plus les deux machines électriques (14, 20) d'une manière correspondant à une distribution de couple entre les essieux moteurs (16, 22).

6. Système de transmission intégrale (12) selon l'une quelconque des revendications précédentes,
**caractérisé en ce que**
la seconde électronique de puissance (24) est conçue pour commander le régime de la seconde machine électrique (20) en tenant compte d'au moins un régime cible déterminé par un système antipatinage du véhicule à moteur (10) pour au moins un des deux essieux moteurs (16,22).

7. Système de transmission intégrale (12) selon l'une quelconque des revendications précédentes,
**caractérisé en ce que**
les deux machines électriques (14, 20) présentent respectivement au moins la même puissance maximale qu'une batterie de propulsion du véhicule à moteur (10).

8. Système de transmission intégrale (12) selon l'une quelconque des revendications précédentes,
**caractérisé en ce que**
les deux électroniques de puissance (18, 24) disposent d'un circuit intermédiaire commun.

9. Véhicule à moteur (10) avec un système de transmission intégrale (12) selon l'une quelconque des revendications précédentes.

10. Procédé pour faire fonctionner un système de transmission intégrale (12) selon l'une quelconque des revendications 1 à 8, dans lequel la seconde électronique de puissance (24) commande la vitesse de la seconde machine électrique (20) en fonction d'un régime de la première machine électrique (14) et d'un régime différentiel prédéterminé entre la première machine électrique (14) et la seconde machine électrique (20).
